# FASCICULE DE BREVET EUROPEEN

(11) **EP 1 880 066 B1**
(45) Date de publication et mention de la délivrance du brevet: **24.07.2013**
(21) Numéro de dépôt: 05824247.0
(22) Date de dépôt: 06.12.2005
(51) Int. Cl.: E04F 13/08, F16B 37/08

(54) **PROCÉDÉ DE DOUBLAGE DE PAROI, DOUBLAGE DE PAROI OBTENU PAR CE PROCÉDÉ ET KIT DE FIXATION ASSOCIÉ**
WANDVERKLEIDUNGSVERFAHREN, SO ERHALTENE WANDVERKLEIDUNGEN UND ZUGEHÖRIGE BEFESTIGUNGSAUSRÜSTUNG
WALL LINING METHOD, WALL LINING THUS OBTAINED AND ASSOCIATED FIXING KIT

(30) Priorité: 06.12.2004 FR 0452876
(43) Date de publication de la demande: 23.01.2008
(73) Titulaire: SAINT-GOBAIN ISOVER, 92400 Courbevoie (FR)
(72) Inventeur: JORET, Laurent, F-92370 Chaville (FR)
(74) Mandataire: Cardin, Elise
(86) Numéro de dépôt international: PCT/FR2005/051038
(87) Numéro de publication internationale: WO 2006/061538

(56) Documents cités:
- EP-A- 0 718 451
- EP-A- 0 727 546
- EP-A- 1 156 172
- WO-A-03/008734
- FR-A- 2 785 312
- FR-A- 2 822 179
- FR-A- 2 852 989

## Description

La présente invention a trait au doublage de parois verticales, à l'intérieur de bâtiment, visant à procurer une isolation thermique, acoustique, ainsi qu'un aspect uniforme, lisse. Les parois sont de hauteurs comprises entre 2,40 et 6 m, et peuvent être constituées d'un mur en béton, parpaings, briques, pierres mais aussi d'une paroi de maison à ossature bois constituée de montants en bois verticaux.

On connaît en particulier des documents EP 718 451 A1 et EP 727 546 A1, des systèmes composés de tiges filetées fixées à la paroi à isoler, de matelas de laine minérale que l'on embroche sur ou intercale entre les tiges filetées, puis maintient contre la paroi par des profilés métalliques solidarisés aux tiges filetées par l'intermédiaire de platines taraudées.

Ces platines comportent par exemple deux mâchoires diamétralement opposées leur permettant de venir en engagement avec les ailes de retour d'un profilé en U tous les demi-tours de rotation.

Ce système permet un réglage fin de la distance du profilé déjà en place à la paroi.

Les documents FR 2 822 179 et FR 2 852 989 en décrivent des perfectionnements dans lesquels un cavalier de maintien et blocage du profilé en U est monté à rotation, ou vissé à la platine taraudée.

Le document EP 1 156 172 A décrit un cavalier support du profilé en U associé à un levier permettant de fixer sa position sur une tige filetée d'entretoisement par un système de guillotine.

Le document WO 03/008734 A décrit un système comparable fonctionnant par pincement d'une tige d'entretoisement, sous l'action d'un ressort de rappel, le pincement pouvant être libéré par action d'une force sur un double levier.

Le document FR 2 785 312 A décrit des éléments d'entretoisement, positionnement et maintien d'un profilé en U comportant des filetages chanfreinés, des taraudages alésés, et nécessitant l'utilisation d'un outil supplémentaire, tel qu'une clé.

Les profilés peuvent être dits en C, I, L, U, W, Z selon leur forme et sont également appelés fourrures. S'ils sont de nature métallique, ils sont conformes au projet de norme pr-EN 14 195. Ils sont insérés en pied et en tête dans des cornières ou des profilés en U, appelés aussi lisses, fixés au sol et au plafond. Enfin, le doublage de paroi est complété par des plaques de plâtre mises en appui contre les fourrures et les lisses et vissées à ces fourrures.

Les fourrures sont traditionnellement disposées verticalement, même si on peut trouver, très rarement (voir par exemple l'Avis Technique 9/03-759 du Centre Scientifique et Technique du Bâtiment) des fourrures disposées horizontalement, notamment au nombre de deux pour les hauteurs de parois précitées. Montées en position verticale, les fourrures sont habituellement fixées à la paroi tous les 1,30 m à 1,50 m - toujours pour les hauteurs de parois précitées, et pour un parement de plaques de plâtre courantes, dont il sera question plus en détails par la suite.

Le problème dont traite plus particulièrement l'invention est de faciliter le montage de ce type de doublage de paroi.

A cette fin, l'invention a pour objet un procédé de doublage d'une paroi comprenant :
- la fixation sur la paroi d'éléments d'entretoisement,
- l'embrochement sur ou l'intercalation entre les éléments d'entretoisement d'un isolant thermique et/ou acoustique,
- l'engagement sur chaque élément d'entretoisement d'un élément de maintien d'une fourrure d'appui d'un parement, selon une translation de direction sensiblement perpendiculaire à la paroi,
- éventuellement le blocage de cette liberté en translation par rotation de l'élément de maintien selon un axe perpendiculaire à la paroi, puis déblocage par rotation inverse,
- la mise en contact d'une fourrure avec au moins un élément de maintien en position débloquée de sa translation,
- le réglage de la position de la fourrure puis
- le blocage de la translation de l'élément de maintien,
caractérisé en ce que lesdits blocage et déblocage de la translation sont effectués au moyen d'un unique levier solidaire de l'élément de maintien, en ce que dans la position de blocage final, ce levier est en butée sur la fourrure qui est fixée par l'élément de maintien.

L'isolant thermique et/ou acoustique est susceptible, selon ses caractéristiques et son épaisseur, d'exercer une certaine pression sur l'élément de maintien, tendant à le désolidariser de son élément d'entretoisement. Dans ces cas il est nécessaire de bloquer la translation relative des deux éléments, puis ne la débloquer qu'après mise en contact d'une fourrure avec l'élément de maintien de manière à empêcher son expulsion de l'élément d'entretoisement.

Par le procédé de l'invention, il est particulièrement aisé de régler la position de la fourrure dans sa partie médiane par action sur un unique levier positionné d'un côté de la fourrure, la position de ses extrémités basse et haute étant fixée au préalable selon la mesure habituelle. Le levier est solidaire de l'élément de maintien et rend superflu l'emploi d'un outil supplémentaire tel qu'une clé.

La position bloquée de la translation relative de l'élément de maintien sur l'élément d'entretoisement est facilement identifiée par la butée du levier sur la fourrure ; cette butée peut être réalisée par une partie plane du levier perpendiculaire à la paroi.

La paroi est de préférence sensiblement verticale de hauteur comprise entre 2,40 et 6 m, et chaque fourrure positionnée verticalement.

Selon une caractéristique avantageuse en ce qui concerne la facilité de montage, un seul élément de maintien est associé à chaque fourrure. Il est alors fixé dans la moitié médiane de la hauteur de la paroi, c'est-à-dire à mi-hauteur plus ou moins 25 % de la hauteur totale. Il est alors particulièrement simple de contrôler la linéarité de la fourrure en position débloquée de la translation de son unique élément de maintien, puis d'immobiliser la fourrure dans la position correcte par action sur un seul levier.

Cependant, il n'est pas exclu d'associer à une fourrure plus d'un élément de maintien selon la longueur de la fourrure - hauteur de la paroi -, le matériau qui la constitue et son inertie. On peut citer le cas de deux éléments de maintien espacés approximativement de 1,30 m.

Selon d'autres caractéristiques du procédé de l'invention :
- les deux extrémités de chaque fourrure sont positionnées dans des lisses préalablement fixées au sol et au plafond ; elles y sont notamment encastrées de manière à être bloquées au moins dans la direction perpendiculaire à la paroi ;
- le réglage de la position de la fourrure comprend le contrôle de sa linéarité par appui d'une règle rigide sur elle; cette opération consiste à appliquer au moyen d'une règle rigide une force suffisante sur la fourrure en engagement avec son élément de maintien en position débloquée de sa translation sur l'élément d'entretoisement; lorsque la fourrure forme, sous la pression de la laine minérale, une convexité, on appuie la règle rigide sur la fourrure jusqu'à ce que la règle rigide vienne buter sur la lisse du bas et du haut, puis on bloque la translation, l'alignement ou la linéarité de la fourrure étant ainsi obtenus; et
- l'espacement entre deux fourrures voisines est de 40 ou, de préférence, 60 cm pour un parement constitué de plaques de 120 cm de large.

L'invention a d'autre part pour objet le doublage de paroi obtenu par le procédé décrit ci-dessus, caractérisé en ce que l'élément d'entretoisement comprend une tige filetée dont le filetage est chanfreiné en au moins une fraction angulaire, et l'élément de maintien d'une fourrure comprend un taraudage correspondant au filetage de la tige et alésé en au moins une fraction angulaire correspondant à la ou aux fractions angulaires non chanfreinés du filetage de sorte que les deux éléments soient de libre translation relative selon l'axe de la tige quand la ou les fractions angulaires filetées de la tige est (sont) mise(s) en regard de la ou des fractions angulaires alésées du taraudage, et la ou les fractions angulaires chanfreinées du filetage en regard de la ou des fractions angulaires de taraudage.

Les termes chanfreiné, alésé peuvent ne pas faire référence à la mise en forme par usinage de pièces métalliques. Ils désignent plutôt ici une forme chanfreinée, respectivement une forme présentant un évidement, obtenues notamment par injection/moulage d'un thermoplastique.

Avantageusement, la partie de l'élément de maintien d'une fourrure qui est en vis-à-vis de l'extrémité de la tige filetée, est pleine de manière à empêcher cette extrémité de transpercer la fourrure puis éventuellement le parement quand celui-ci est soumis à un choc.

Selon d'autres caractéristiques du doublage de paroi :
- l'isolant thermique et/ou acoustique est un matelas de laine minérale de masse volumique comprise entre 10 et 100 kg/m³, notamment de laine de verre ou de roche ;
- les fourrures sont métalliques et ont une inertie comprise entre 0,2 et 2 cm⁴, ou non métalliques avec un produit du module d'Young du matériau les constituant et de l'inertie de leur section compris entre 60 et 600 N.m² ;
- l'élément de maintien d'une fourrure est constitué d'une matière plastique injectable, parmi lesquelles peuvent être cités les polyoléfines (polyéthylène, polypropylène...), les poly(chlorures de vinyle), les polyamides, les styréniques, seuls ou en mélanges de plusieurs d'entre eux, et éventuellement chargés (par des fibres de verre ou autres) - notamment en vue de leur renforcement mécanique -;
- la tige filetée est constituée d'une matière plastique injectable et avantageusement sécable au moyen d'une pince coupante; peuvent être citées les mêmes matières que pour l'élément de maintien précédemment;
- le parement consiste en plaques de plâtre, en particulier de types satisfaisant aux normes NF P72-302 ou ISO 6308. Ces plaques sont donc fabriquées par laminage d'un mélange de plâtre et d'eau pouvant être additionné d'adjuvants tels que produit moussant, fibre, etc. entre deux feuilles de carton dont l'une est retournée sur les bords longitudinaux et encollée avec l'autre. On cite en particulier des plaques de 12,5 mm d'épaisseur, de masse surfacique comprise entre 8,5 et 12 kg/m², de 1,20 m de large, de longueur comprise entre 2,5 et 3 m.

Un autre objet de l'invention est constitué par un kit de fixation d'un doublage de paroi tel que défini dans la revendication 14. Ce kit comprend un élément de maintien et un élément d'entretoisement aptes à entrer en relation bloquée de l'élément de maintien sur l'élément d'entretoisement, caractérisé en ce que l'élément de maintien est pourvu d'un unique levier solidaire permettant le passage de la position bloquée à la position débloquée et inversement par rotation.

L'invention est illustrée par la description qui suit des dessins annexés dans lesquels
- la figure 1 représente schématiquement le doublage de paroi dans son ensemble ;
- les figures 2 et 3 sont des vues éclatées en perspective de l'élément de maintien et de l'élément d'entretoisement en position de translation relative, respectivement de blocage de cette translation ; et
- la figure 4 représente la liaison complète de la fourrure à la paroi en position de réglage final.

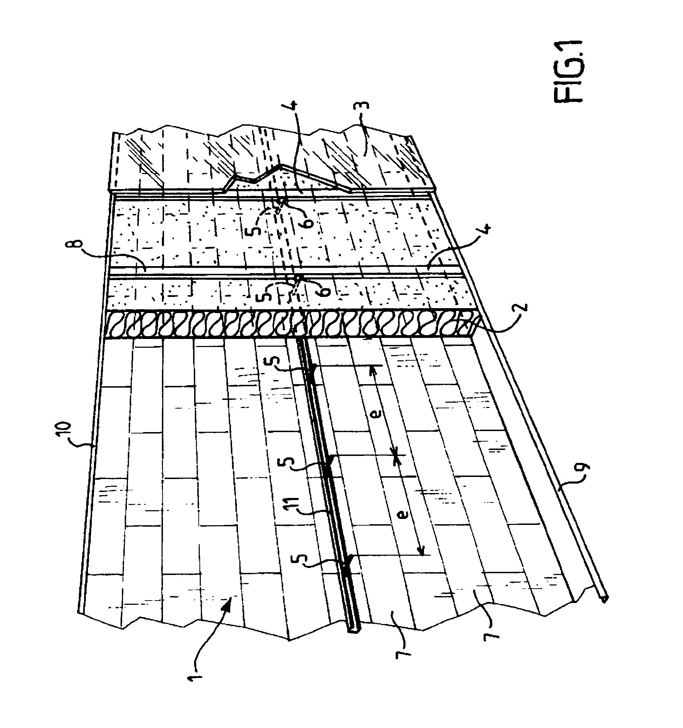

Sur la figure 1 est représenté un doublage de paroi 1 par un revêtement comprenant des panneaux de laine minérale 2 recouverts par des plaques de parement en plâtre 3 du type particulier mentionné précédemment.

Les plaques de parement 3 sont fixées en position verticale sur une ossature métallique 4 maintenue par un système de montage et de fixation comprenant un élément d'entretoisement 5 et un élément de maintien 6.

La paroi 1 à revêtir est formée de briques ou parpaings 7 jointoyés. L'ossature est constituée de profilés en U avec deux ailes de retour ou fourrures 8 disposées verticalement entre une lisse basse 9 et une lisse haute 10, dans lesquelles elles sont emboîtées, maintenues dans la direction perpendiculaire à la paroi 1.

Les fourrures 8 sont disposées avec un écartement e de 60 cm les unes des autres et à une distance du mur correspondant pratiquement à l'épaisseur des panneaux isolants 2 utilisés. Les épaisseurs disponibles de panneaux de laine minérale sont notamment de 65, 75, 85 ou 100 mm.

La hauteur de la paroi 1 est de 2,50 m. On fixe sur la paroi 1 à mi-hauteur et horizontalement une fourrure 11 identique à (mais pouvant être également différente de) la fourrure 8 sus-mentionnée. On insère, par exemple on clipse ou encliquète dans cette fourrure 11 des éléments d'entretoisement 5 à intervalles réguliers de 60 cm. On embroche les panneaux isolants 2 en laine minérale de masse volumique comprise entre 10 et 100 kg/m³, sur les éléments d'entretoisement 5.

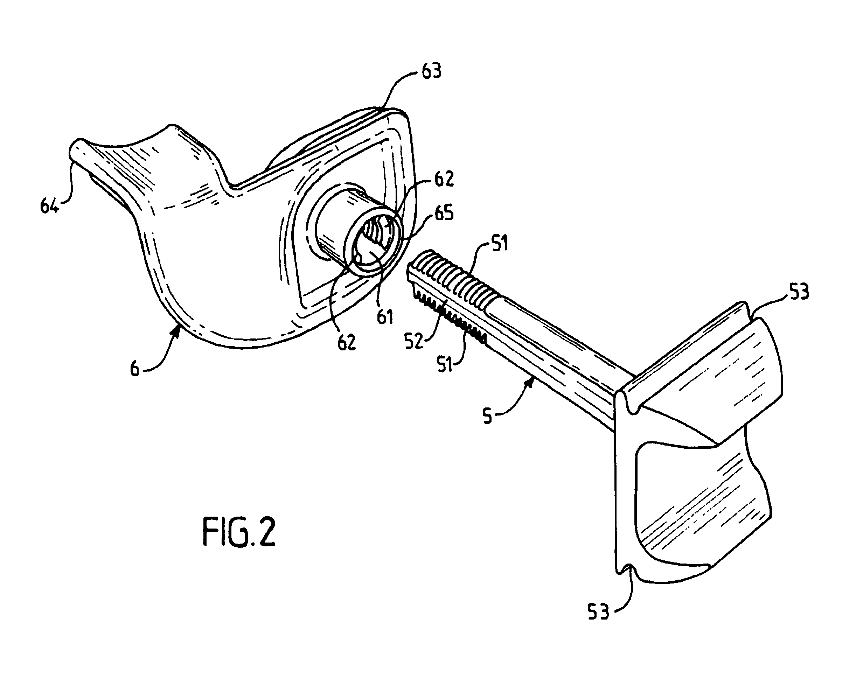

On adapte ensuite sur chaque élément d'entretoisement 5 un élément de maintien 6 d'une fourrure 8 d'une manière qui sera décrite en détails dans la suite en relation avec les figures 2 à 4. L'élément de maintien 6 peut être bloqué en translation sur l'élément d'entretoisement 5 de manière à comprimer légèrement le panneau isolant 2.

On vient emboîter la fourrure 8 dans la lisse du bas 9 et la lisse du haut 10, en face de l'élément de maintien 6.

Deux opérations sont alors réalisées successivement:
- la mise en contact de la fourrure 8 avec l'élément de maintien 6, leur engagement mutuel par exemple avec encliquetage,
- le déblocage de la translation de l'élément de maintien 6 par rapport à l'élément d'entretoisement 5 par rotation du premier sur le second selon un axe perpendiculaire à la paroi 1. Cette opération n'est effectuée que s'il y a eu blocage préalable de cette translation.

Dans cette situation, seul l'élément d'entretoisement 5 est fixe. L'ensemble constitué par l'élément de maintien 6 et la fourrure 8 coulisse sur celui-ci jusqu'à la position désirée. Une fois celle-ci obtenue, l'élément de maintien 6 est soumis à une rotation inverse de celle précitée, à la fois par rapport à l'élément d'entretoisement 5 et à la fourrure 8, dans laquelle il reste en engagement.

La manière dont coopèrent élément d'entretoisement 5, élément de maintien 6 et fourrure 8 est maintenant expliquée en détails en relation avec les figures 2, 3 et 4.

L'élément d'entretoisement 5 est en une matière plastique sécable par une pince coupante, en l'occurrence en polyamide. Ainsi sa longueur peut être adaptée à l'épaisseur du panneau isolant. L'élément d'entretoisement 5 comprend une tige présentant deux fractions angulaires 51 diamétralement opposées filetées, et deux fractions angulaires 52 complémentaires des fractions 51 également diamétralement opposées dans lesquelles le filetage est chanfreiné.

Il comprend d'autre part une extrémité à déformation élastique munie de deux rainures 53 le rendant propre à un encliquetage dans une fourrure 11 - voir fig. 1.

L'élément de maintien est également en polyamide, réalisé par injection et comprend un taraudage correspondant au filetage de l'élément d'entretoisement 5. Le taraudage est alésé selon deux fractions angulaires 61 correspondant au moins aux deux fractions angulaires 51 filetées de l'élément d'entretoisement 5. Le taraudage définit deux fractions angulaires 62 complémentaires des fractions 61.

Lorsque, comme dans la position représentée à la figure 2, les fractions angulaires 51 filetées de l'élément d'entretoisement 5 sont en correspondance avec les fractions angulaires 61 alésées du taraudage de l'élément de maintien 6, les éléments 5 et 6 sont libres de translation l'un par rapport à l'autre selon l'axe du filetage.

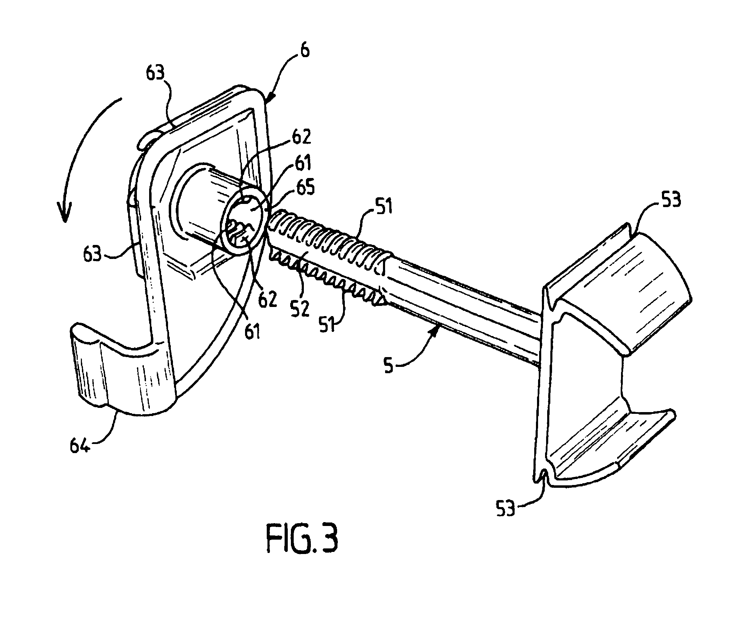

Lorsqu'au contraire, comme représenté à la figure 3, il y a recouvrement - même partiel - entre les fractions angulaires 51 filetées de l'élément d'entretoisement 5 et les fractions angulaires 62 taraudées de l'élément de maintien 6, cette liberté en translation est bloquée.

Les deux ailes de retour du profilé en U constituant la fourrure 8 sont aptes à pénétrer avec encliquetage dans une rainure 63 formée sur l'élément de maintien 6. Cette rainure 63 est conformée de telle sorte que, lors de toutes rotations de l'élément de maintien 6 à la fois par rapport à l'élément d'entretoisement 5 et à la fourrure 8 visant à bloquer et débloquer la translation sur l'élément 5, l'élément de maintien 6 reste en engagement avec la fourrure 8.

L'élément de maintien 6 comprend une extension qui peut être sensiblement plane, faisant saillie perpendiculairement à la paroi 1 en position de montage, formant levier 64.

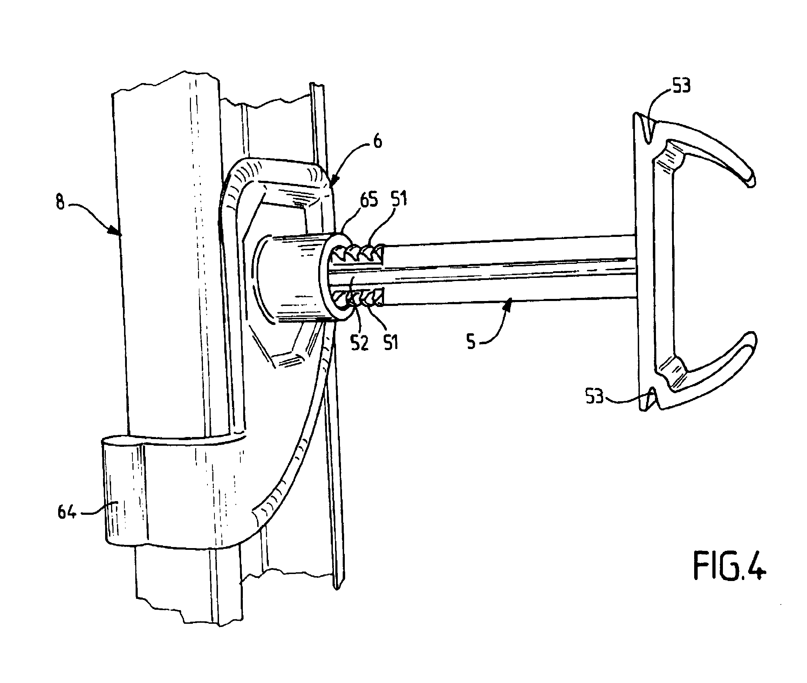

Ce levier 64 a une forme légèrement arrondie en facilitant l'actionnement par le pouce, ou éventuellement un autre doigt. La forme du levier 64 en permet d'autre part la mise en butée sur la fourrure 8 - voir figure 4 - dans une position de blocage de la translation sur l'élément d'entretoisement 5.

Ce système est d'utilisation particulièrement simple. La fourrure 8 présente une relative flexibilité ; une fois emboîtée à ses deux extrémités dans la lisse du haut 10, la lisse du bas 9 et l'élément de maintien 6, elle est susceptible de présenter des défauts de linéarité, pour diverses causes.

Le réglage de la position de l'élément de maintien 6 en engagement avec la fourrure 8 sur l'élément d'entretoisement 5 est très facile. On emploie à cet effet une règle rigide que l'on plaque sur la fourrure 8, afin de repérer en quelques secondes au plus à quelle position sur l'élément d'entretoisement 5 il convient de fixer l'élément de maintien 6.

La partie non représentée de ce dernier 6 en vis-à-vis de l'extrémité filetée de l'élément d'entretoisement 5 est bouchée, pleine, de manière à empêcher cette extrémité filetée de transpercer la fourrure, puis la plaque de plâtre quand celle-ci subit un choc puissant.

Il doit être remarqué par ailleurs que la partie de l'élément de maintien 6 en contact avec la laine minérale 2 est sensiblement plane, ne présentant qu'une excroissance 65 des plus limitées. Ceci est très favorable car il convient de ne pas comprimer la laine minérale 2 dans un double souci de ne pas l'endommager - notamment lorsqu'elle est munie d'un surfaçage pare-vapeur ou autre -, et d'efficacité de l'isolation thermique/acoustique.

Dans le cas où l'on utilise plusieurs points de fixation avec éléments d'entretoisement, le réglage reste tout aussi simple : les éléments de maintien tous en position débloquée, on règle la linéarité comme décrit plus haut, puis l'on bloque successivement tous les éléments d'appui par basculement des leviers en quelques gestes rapidement enchaînés.

## Revendications

1. Procédé de doublage d'une paroi (1) comprenant :
- la fixation sur la paroi (1) d'éléments d'entretoisement (5),
- l'embrochement sur ou l'intercalation entre les éléments d'entretoisement (5) d'un isolant thermique et/ou acoustique (2),
- l'engagement sur chaque élément d'entretoisement (5) d'un élément de maintien (6) d'une fourrure (8) d'appui d'un parement (3), selon une translation de direction sensiblement perpendiculaire à la paroi (1),
- éventuellement le blocage de cette liberté en translation par rotation de l'élément de maintien (6) selon un axe perpendiculaire à la paroi (1), puis déblocage par rotation inverse,
- la mise en contact d'une fourrure (8) avec au moins un élément de maintien (6),
- le réglage de la position de la fourrure (8) puis
- le blocage de la translation de l'élément de maintien (6),
**caractérisé en ce que** lesdits blocage et déblocage de la translation sont effectués au moyen d'un unique levier (64) solidaire de l'élément de maintien (6), **en ce que** dans la position de blocage final, ce levier (64) est en butée sur la fourrure (8) qui est fixée par l'élément de maintien (6).

2. Procédé selon la revendication 1, **caractérisé en ce que** la paroi (1) est sensiblement verticale de hauteur comprise entre 2,40 et 6 m, et **en ce que** chaque fourrure (8) est positionnée verticalement.

3. Procédé selon la revendication 1 ou 2, **caractérisé en ce qu'**à chaque fourrure (8) est associé un seul élément de maintien (6).

4. Procédé selon l'une des revendications précédentes, **caractérisé en ce que** les deux extrémités de chaque fourrure (8) sont positionnées dans des lisses préalablement fixées au sol (9) et au plafond (10).

5. Procédé selon l'une des revendications précédentes, **caractérisé en ce que** le réglage de la position de la fourrure (8) comprend le contrôle de sa linéarité par appui d'une règle rigide sur elle (8).

6. Procédé selon l'une des revendications 2 à 5, **caractérisé en ce que** l'espacement entre deux fourrures (8) voisines est de 40 ou, de préférence 60 cm pour un parement (3) constitué de plaques de 120 cm de large.

7. Doublage de paroi (1) obtenu par le procédé selon l'une des revendications précédentes,
- comprenant : des éléments d'entretoisement (5) fixés sur la paroi ; un isolant thermique et/ou acoustique (2) embroché sur ou intercalé entre les éléments d'entretoisement (5) ; des fourrures (8) d'appui d'un parement (3) maintenues sur des éléments de maintien (6) qui sont engagés chacun sur un élément d'entretoisement (5) ;
- chaque élément de maintien (6) comportant un unique levier (64) solidaire de l'élément de maintien (6), ledit levier étant adapté pour bloquer et débloquer une translation de direction sensiblement perpendiculaire à la paroi (1) de l'élément de maintien (6) sur l'élément d'entretoisement (5) associé ;
- chaque élément de maintien (6) étant bloqué en translation sur ledit élément d'entretoisement (5) associé, ledit levier (64) étant en butée sur la fourrure (8) qui est fixée par l'élément de maintien (6),
**caractérisé en ce que** l'élément d'entretoisement (5) comprend une tige filetée dont le filetage est chanfreiné en au moins une fraction angulaire (52), et l'élément de maintien (6) d'une fourrure (8) comprend un taraudage correspondant au filetage de la tige et alésé en au moins une fraction angulaire (61) correspondant à la ou aux fractions angulaires (51) non chanfreinés du filetage de sorte que les deux éléments (5, 6) soient de libre translation relative selon l'axe de la tige quand la ou les fractions angulaires filetées (51) de la tige est (sont) mise(s) en regard de la ou des fractions angulaires alésées (61) du taraudage, et la ou les fractions angulaires chanfreinées (52) du filetage en regard de la ou des fractions angulaires de taraudage (62).

8. Doublage de paroi (1) selon la revendication 7, **caractérisé en ce que** la partie de l'élément de maintien (6) d'une fourrure (8) qui est en vis-à-vis de l'extrémité de la tige filetée, est pleine de manière à empêcher cette extrémité de transpercer la fourrure (8) puis éventuellement le parement (3) quand celui-ci est soumis à un choc.

9. Doublage de paroi (1) selon la revendication 7 ou 8, **caractérisé en ce que** l'isolant thermique et/ou acoustique (2) est un matelas de laine minérale de masse volumique comprise entre 10 et 100 kg/m³, notamment de laine de verre ou de roche.

10. Doublage de paroi (1) selon l'une des revendications 7 à 9, **caractérisé en ce que**
- soit les fourrures (8) sont métalliques et ont une inertie comprise entre 0,2 et 2 cm⁴ ;
- soit les fourrures (8) ne sont pas métalliques et le produit du module d'Young du matériau les constituant et de l'inertie de la section de la fourrure (8) est compris entre 60 et 600 N.m².

11. Doublage de paroi (1) selon l'une des revendications 7 à 10, **caractérisé en ce que** l'élément de maintien (6) d'une fourrure (8) est constitué d'une matière plastique injectable.

12. Doublage de paroi (1) selon l'une des revendications 7 à 11, **caractérisé en ce que** la tige filetée est constituée d'une matière plastique injectable et sécable au moyen d'une pince coupante.

13. Doublage de paroi (1) selon l'une des revendications 7 à 12, **caractérisé en ce que** le parement (13) consiste en plaques de plâtre.

14. Kit de fixation d'un doublage de paroi (1) comprenant un élément de maintien (6) et un élément d'entretoisement (5) aptes à entrer en relation bloquée de l'élément de maintien (6) sur l'élément d'entretoisement (5), **caractérisé en ce que** l'élément de maintien (6) est pourvu d'un unique levier (64) solidaire permettant le passage de la position bloquée à la position débloquée et inversement par rotation, le levier (64) faisant partie de l'élément de maintien (6) avec lequel il forme un ensemble intègre de manière que sa rotation entraîne celle de la totalité de celui-ci (6).

## Patentansprüche

1. Verfahren zum Verkleiden einer Wand (1), umfassend:
- das Befestigen von Verstrebungselementen (5) an der Wand (1),
- das Aufstecken auf oder das Einfügen eines Wärmedämmstoffes und/oder Schalldämmstoffes (2) zwischen die Verstrebungselemente (5),
- das in Eingriff bringen eines Halteelementes (6) einer Auskleidung (8) zum Stützen einer Blende (3) mit jedem der Verstrebungselemente (5) über eine Verschiebung im Wesentlichen senkrecht zu der Wand (1),
- eventuell das Sperren dieses Verschiebungsspielraums durch Rotation des Halteelementes (6) um eine senkrecht zur Wand (1) angeordnete Achse und das Entsperren durch Rotation in die andere Richtung,
- das Verbinden einer Auskleidung (8) mit mindestens einem Halteelement (6),
- das Regulieren der Position der Auskleidung (8) und
- das Sperren der Verschiebung des Halteelementes (6),
**dadurch gekennzeichnet, dass** das Sperren und das Entsperren der Verschiebung durch Betätigung eines einzigen Hebels (64), der fest mit dem Halteelement (6) verbunden ist, erfolgen, und dadurch, dass sich dieser Hebel (64) in der Sperr-Endposition im Anschlag auf der Auskleidung (8), die von dem Halteelement (6) fixiert wird, befindet.

2. Verfahren nach Anspruch 1, **dadurch gekennzeichnet, dass** die Wand (1) im Wesentlichen senkrecht ist und eine Höhe zwischen 2,4 und 6 m aufweist, und dadurch, dass jede der Auskleidungen (8) senkrecht angeordnet ist.

3. Verfahren nach Anspruch 1 oder 2, **dadurch gekennzeichnet, dass** jeder der Auskleidungen (8) ein einzelnes Halteelement (6) zugeordnet ist.

4. Verfahren nach einem der vorhergehenden Ansprüche, **dadurch gekennzeichnet, dass** die zwei Enden jeder der Auskleidungen (8) in zuvor am Boden (9) und an der Decke (10) angebrachten Balken angeordnet sind.

5. Verfahren nach einem der vorhergehenden Ansprüche, **dadurch gekennzeichnet, dass** das Regulieren der Position der Auskleidung (8) das Überprüfen ihrer (8) Geradlinigkeit durch Auflegen eines starren Lineals umfasst.

6. Verfahren nach einem der Ansprüche 2 bis 5, **dadurch gekennzeichnet, dass** der Abstand zwischen zwei nebeneinander liegenden Auskleidungen (8) bei einer Blende (3) mit einer Plattenbreite von 120 cm 40, vorzugsweise 60 cm beträgt.

7. Verkleidung einer Wand (1), hergestellt nach Verfahren gemäß einem der vorhergehenden Ansprüche,
- umfassend: an der Wand befestigte Verstrebungselemente (5); einen Wärmedämmstoff und/oder Schalldämmstoff (2), aufgesteckt auf oder eingefügt zwischen die Verstrebungselemente (5); Auskleidungen (8) zum Stützen einer Blende (3), die von Halteelementen (6), die jeweils mit einem Verstrebungselement (5) in Eingriff stehen, gehalten werden;
- wobei jedes der Halteelemente (6) einen einzigen Hebel (64) umfasst, der fest mit dem Halteelement (6) verbunden ist, wobei der Hebel dazu angepasst ist, die Sperrung und Entsperrung einer Verschiebung des Halteelementes (6) auf dem zugeordneten Verstrebungselement (5) im Wesentlichen senkrecht zur Wand (1) auszulösen;
- wobei die Verschiebung jedes der Halteelemente (6) auf dem zugeordneten Verstrebungselement (5) gesperrt ist, wobei sich der Hebel (64) im Anschlag auf der Auskleidung (8) befindet, die von dem Halteelement (6) fixiert wird,
**dadurch gekennzeichnet, dass** das Verstrebungselement (5) einen Gewindestab umfasst, dessen Gewinde auf mindestens einem winkelförmigen Anteil (52) abgeschrägt ist, und das Halteelement (6) einer Auskleidung (8) ein Innengewinde umfasst, das dem Gewinde des Stabs entspricht und auf mindestens einem winkelförmigen Anteil (61) entsprechend dem oder den winkelförmigen Anteil(en) (51) des Gewindes, der (die) nicht abgeschrägt ist (sind), ausgebohrt ist, derart, dass die zwei Elemente (5, 6) einen Verschiebungsspielraum im Verhältnis zur Achse des Stabs aufweisen, wenn der oder die winkelförmige(n) Anteil(e) mit Gewinde (51) des Stabs dem oder den winkelförmigen ausgebohrten Anteil(en) (61) des Innengewindes gegenübergestellt wird (werden) oder der oder die abgeschrägte(n) winkelförmige(n) Anteil(e) (52) des Gewindes dem oder den winkelförmigen Anteil(en) mit Innengewinde (62) gegenübergestellt wird (werden).

8. Verkleidung einer Wand (1) nach Anspruch 7, **dadurch gekennzeichnet, dass** der Teil des Halteelementes (6) einer Auskleidung (8), der sich gegenüber des mit Gewinde versehenen Endes des Stabs befindet, solid ist, um das Durchbohren der Auskleidung (8) und eventuell der Blende (3) durch dieses Ende im Falle eines Stoßes zu verhindern.

9. Verkleidung einer Wand (1) nach Anspruch 7 oder 8, **dadurch gekennzeichnet, dass** der Wärmedämmstoff und/oder Schalldämmstoff (2) eine Mineralfasermatte mit einer Dichte, die zwischen 10 und 100 kg/m³ liegt, ist, insbesondere bestehend aus Glasfaser oder Steinfaser.

10. Verkleidung einer Wand (1) nach einem der Ansprüche 7 bis 9, **dadurch gekennzeichnet, dass**
- die Auskleidungen (8) entweder metallisch sind und eine Trägheit zwischen 0,2 und 2 cm⁴ aufweisen;
- oder die Auskleidungen (8) nicht metallisch sind und das Produkt des Elastizitätsmodules des Materials, aus dem sie bestehen und der Trägheit des Abschnittes der Auskleidung (8) zwischen 60 und 600 Nm² liegt.

11. Verkleidung einer Wand (1) nach einem der Ansprüche 7 bis 10, **dadurch gekennzeichnet, dass** das Halteelement (6) einer Auskleidung (8) aus einem einspritzbaren Kunststoffmaterial besteht.

12. Verkleidung einer Wand (1) nach einem der Ansprüche 7 bis 11, **dadurch gekennzeichnet, dass** der Gewindestab aus einem einspritzbaren Kunststoffmaterial besteht und mithilfe einer Schneidzange teilbar ist.

13. Verkleidung einer Wand (1) nach einem der Ansprüche 7 bis 12, **dadurch gekennzeichnet, dass** die Blende (3) aus Gipsplatten besteht.

14. Ausrüstung zur Befestigung einer Verkleidung einer Wand (1), umfassend ein Halteelement (6) und ein Verstrebungselement (5), die geeignet sind, derart in Eingriff zu stehen, dass das Halteelement (6) auf dem Verstrebungselement (5) gesperrt ist, **dadurch gekennzeichnet, dass** das Halteelement (6) mit einem einzigen Hebel (64) versehen und fest verbunden ist, der den Übergang von der Sperrposition in die Entsperrposition und umgekehrt durch Rotation zulässt, wobei der Hebel (64) Teil des Halteelementes (6) ist, mit dem er fest verbunden ist, derartig, dass die Rotation des Hebels die Rotation des gesamten Halteelementes (6) auslöst.

## Claims

1. Method for lining a wall (1), comprising:
- fixing spacing elements (5) to the wall (1),
- fitting thermal and/or acoustic insulation (2) onto or between the spacing elements (5),
- engaging an element (6) for retaining a furring strip (8) for supporting a facing (3) with each spacing element (5), by translation in a direction substantially perpendicular to the wall (1),
- locking this translational freedom if necessary, by rotating the retaining element (6) about an axis perpendicular to the wall (1), and then unlocking it by reverse rotation,
- bringing a furring strip (8) into contact with at least one retaining element (6),
- adjusting the position of the furring strip (8), and
- locking the translation of the holding element (6),
**characterized in that** said locking and unlocking of the translation are carried out by means of a single lever (64) fixed to the retaining element (6), and **in that**, in the final locking position, this lever (64) is stopped against the furring strip (8) which is fixed by the retaining element (6).

2. Method according to Claim 1, **characterized in that** the wall (1) is substantially vertical and has a height in the range from 2.40 to 6 m, and **in that** each furring strip (8) is positioned vertically.

3. Method according to Claim 1 or 2, **characterized in that** each furring strip (8) is associated with a single retaining element (6).

4. Method according to one of the preceding claims, **characterized in that** the two ends of each furring strip (8) are positioned in stringers previously fixed to the floor (9) and to the ceiling (10).

5. Method according to one of the preceding claims, **characterized in that** the adjustment of the position of the furring strip (8) comprises the checking of its straightness by the application of a rigid straightedge to it (8).

6. Method according to one of Claims 2 to 5, **characterized in that** the spacing between two neighboring furring strips (8) is 40 cm, or preferably 60 cm, for a facing (3) consisting of panels with a width of 120 cm.

7. Wall lining (1) produced by the method according to one of the preceding claims,
- comprising: spacing elements (5) fixed to the wall; a thermal and/or acoustic insulation (2) fitted onto or between the spacing elements (5); furring strips (8) for supporting a facing (3), which are retained on retaining elements (6) which are each engaged on a spacing element (5);
- each retaining element (6) comprising a single lever (64) fixed to the retaining element (6), said lever being designed to lock and unlock translation in a direction substantially perpendicular to the wall (1) of the retaining element (6) on the associated spacing element (5);
- each retaining element (6) being locked with respect to translation on said associated spacing element (5), said lever (64) being stopped against the furring strip (8) which is fixed by the retaining element (6),
**characterized in that** the spacing element (5) comprises a threaded rod whose thread is chamfered in at least one angular fraction (52), and the retaining element (6) of a furring strip (8) comprises a tapping corresponding to the thread of the rod and bored in at least one angular fraction (61) corresponding to the non-chamfered angular fraction or fractions (51) of the thread, in such a way that the two elements (5, 6) can be freely translated relatively to each other along the axis of the rod when the threaded angular fraction or fractions (51) of the rod is (are) made to face the bored angular fraction or fractions (61) of the tapping, and the chamfered angular fraction or fractions (52) of the thread are made to face the tapped angular fraction or fractions (62).

8. Wall lining (1) according to Claim 7, **characterized in that** the part of the retaining element (6) of a furring strip (8) which is opposite the end of the threaded rod is solid, to prevent this end from piercing the furring strip (8) and possibly the facing (3) when the latter is subjected to impact.

9. Wall lining (1) according to Claim 7 or 8, **characterized in that** the thermal and/or acoustic insulation (2) is a mat of mineral wool having a mass per unit volume in the range from 10 to 100 kg/m³, for example glass wool or rock wool.

10. wall lining (1) according to one of Claims 7 to 9, **characterized in that**:
- either the furring strips (8) are metallic and have an inertia in the range from 0.2 to 2 cm⁴;
- or the furring strips (8) are not metallic and the product of the Young's modulus of their constituent material and the inertia of the cross section of the furring strip (8) is in the range from 60 to 600 N.m².

11. Wall lining (1) according to one of Claims 7 to 10, **characterized in that** the retaining element (6) of a furring strip (8) consists of an injectable plastics material.

12. Wall lining (1) according to one of Claims 7 to 11, **characterized in that** the threaded rod consists of an injectable plastics material which can be cut with cutting nippers.

13. Wall lining (1) according to one of Claims 7 to 12, **characterized in that** the facing (13) consists of plasterboard panels.

14. Fixing kit for a wall lining (1), comprising a retaining element (6) and a spacing element (5) which can be associated in a way which locks the retaining element (6) onto the spacing element (5), **characterized in that** the retaining element (6) is provided with a single fixed lever (64) allowing a change to be made from the locked position to the unlocked position and vice versa by rotation, the lever (64) forming part of the retaining element (6) with which it forms an integral entity such that its rotation causes the entire retaining element (6) to rotate.
